# EUROPÄISCHE PATENTSCHRIFT

(11) **EP 3 118 570 B1**
(45) Veröffentlichungstag und Bekanntmachung des Hinweises auf die Patenterteilung: **02.09.2020**
(21) Anmeldenummer: 16177793.3
(22) Anmeldetag: 04.07.2016
(51) Int. Cl.: G01B 7/02, G01B 7/30, G01B 21/32, G01B 3/08, G01M 7/08, G01M 17/007

(54) **KÖRPERVERFORMUNGSAUFNEHMER UND ANWENDUNG EINES SOLCHEN KÖRPERVERFORMUNGSAUFNEHMERS**
SENSOR FOR MEASURING THE DEFORMATION OF A BODY AND APPLICATION OF SUCH A SENSOR
CAPTEUR DE DÉFORMATION D'UN CORPS ET APPLICATION DE CE CAPTEUR

(30) Priorität: 15.07.2015 EP 15176921
(43) Veröffentlichungstag der Anmeldung: 18.01.2017
(73) Patentinhaber: Kistler Holding AG, 8408 Winterthur (CH)
(72) Erfinder: Verschut, Roderick, 67346 Speyer (DE); Warkentin, Thomas, 69253 Heiligkreuzsteinach (DE); Sascha, Rundel, 64743 Beerfelden (DE)

(56) Entgegenhaltungen:
- WO-A1-2015/066713
- CN-A- 101 826 270
- DE-A1-102004 055 234
- US-A- 5 317 931
- US-A- 5 430 953
- US-A1- 2005 206 910

## Beschreibung

### Technisches Gebiet

Die Erfindung betrifft einen Körperverformungsaufnehmer und eine Anwendung eines Körperverformungsaufnehmers nach dem Oberbegriff des unabhängigen Anspruches.

### Stand der Technik

Ein solcher Körperverformungsaufnehmer wird in der Unfallforschung bei Automobilen in Crashtest-Dummys (Anthropomorphic Test Devices oder ATD) eingesetzt. Der Körperverformungsaufnehmer erfasst Körperverformungen des Crashtest-Dummys mit einer zeitlichen Auflösung von 0.05msec und kleiner. So prallt bei einem Crash-Test ein Automobil mit einer bestimmten Geschwindigkeit frontal gegen ein Hindernis. Mindestens ein Crashtest-Dummy sitzt im Automobil. Bei dem Frontalaufprall wird der Crashtest-Dummy kurzfristig stark beschleunigt und der Körper des Crashtest-Dummys wird verformt. Der Crash-Test wird regional beispielsweise durch das Euro New Car Assessment Program (Euro NCAP) oder das US New Car Assessment Program (US NCAP) reguliert. Demnach hat die Körperbeschleunigung des Crashtest-Dummys bestimmte Grenzwerte einzuhalten. So beträgt nach Euro NCAP oder US NCAP der Grenzwert für eine Brustbeschleunigung des Crashtest-Dummys 60g während einer Zeitdauer von mindestens 3msec.

Die Schrift US20050206910A1 offenbart einen solchen Körperverformungsaufnehmer mit einem Teleskopausleger, welcher Teleskopausleger sich entlang einer Längsachse von einem ersten Ende zu einem zweiten Ende erstreckt. Der Teleskopausleger ist entlang der Längsachse reversibel zusammenschiebbar, wodurch sich seine Länge ändert. Im Inneren des Teleskopauslegers ist am ersten Ende eine Lichtquelle und am zweiten Ende ist ein Lichtempfänger angeordnet. Der Lichtempfänger erfasst eine Leuchtdichte des von der Lichtquelle ausgesandten Lichtes. Die erfasste Leuchtdichte ändert sich mit der Länge des Teleskopauslegers.

Der Körperverformungsaufnehmer lässt sich in den Brustkorb eines Crashtest-Dummys einbauen. So zeigt die Schrift US20050206910A1, wie der Teleskopausleger mit seiner Längsachse parallel zu einer Horizontalachse des Crashtest-Dummys angeordnet ist. Bei Verformung des Brustkorbs entlang seiner Horizontalachse wird der Teleskopausleger zusammengeschoben, wodurch sich seine Länge ändert. Der Lichtempfänger erfasst die Änderung der Länge als Leuchtdichteänderung. Die Leuchtdichteänderung ist ein eindeutiges Ausgangssignal über die Verformung des Brustkorbes entlang der Längsachse.

US5430953A beschreibt einen Körperverformungsaufnehmer zum Erfassen von geologischen Verformungen wie sie bei Sprengungen auftreten. Dazu weist er einen längenverschiebbaren, steifen Stab auf, der in zwei aufeinander senkrecht stehenden Drehrichtungen drehbar ist und drei Sensoren in Form von Potentiometern aufweist.

CN101826270A zeigt einen Körperverformungsaufnehmer für einen Dummy mit einem Seilpotentiometer für vertikale Längenänderungen im Oberkörper.

Die Schrift WO2015066713A lehrt einen Körperverformungsaufnehmer für Rippen eines Crashtest Dummies mit zwei Seilpotentiometern zur Erfassung eines Abstandes und eines Winkels zwischen einem Aufhängepunkt und einem Referenzpunkt.

Aus Schrift US5317931A ist eine Körperverformungsaufnehmereinheit mit zwei Seilpotentiometern bekannt. Die Schrift erwähnt die Möglichkeit der Aufnahme mehrerer Winkel durch die Verwendung mehrerer Körperverformungsaufnehmereinheiten.

Aufgabe der vorliegenden Erfindung ist es, einen solchen Körperverformungsaufnehmer zu verbessern.

### Darstellung der Erfindung

Diese Aufgabe wird durch die Merkmale des unabhängigen Anspruches gelöst.

Die Erfindung betrifft einen Körperverformungsaufnehmer nach Anspruch 1.

Im Unterschied zum Stand der Technik gemäss der Schrift US20050206910A1 erfasst der erfindungsgemässe Körperverformungsaufnehmer nicht nur eine Änderung der Länge des Teleskopauslegers entlang seiner Längsachse, sondern auch mindestens eine Drehung des Teleskopauslegers um eine Achse senkrecht zur Längsachse. Dadurch verbessert sich die Genauigkeit bei der Erfassung der Körperverformungen. Es hat sich nämlich herausgestellt, dass ein Körperdeformation in der Regel nicht nur entlang einer Längsachse erfolgt, sondern auch Komponenten entlang von Achse senkrecht zur Längsachse aufweist. Zudem erfolgt die Erfassung der Länge des Teleskopauslegers und der Drehung des Teleskopauslegers mit einer zeitlichen Auflösung von mindestens 10kHz.

Die Erfindung betrifft auch eine Anwendung eines solchen Körperverformungsaufnehmers in einem Crashtest-Dummy.

### Kurze Beschreibung der Zeichnungen

Im Folgenden wird die Erfindung beispielhaft anhand einer bevorzugten Ausführungsform unter Beizug der Figuren näher erklärt. Es zeigen
- Fig. 1: eine perspektivische Ansicht des Körperverformungsaufnehmers;
- Fig. 2: eine Seitenansicht des Körperverformungsaufnehmers nach Fig. 1;
- Fig. 3: eine Draufsicht des Körperverformungsaufnehmers nach Fig. 1 und 2; und
- Fig. 4: eine Ansicht einer Anwendung des Körperverformungsaufnehmers nach Fig. 1 bis 3 in einem Crashtest-Dummy.

### Wege zur Ausführung der Erfindung

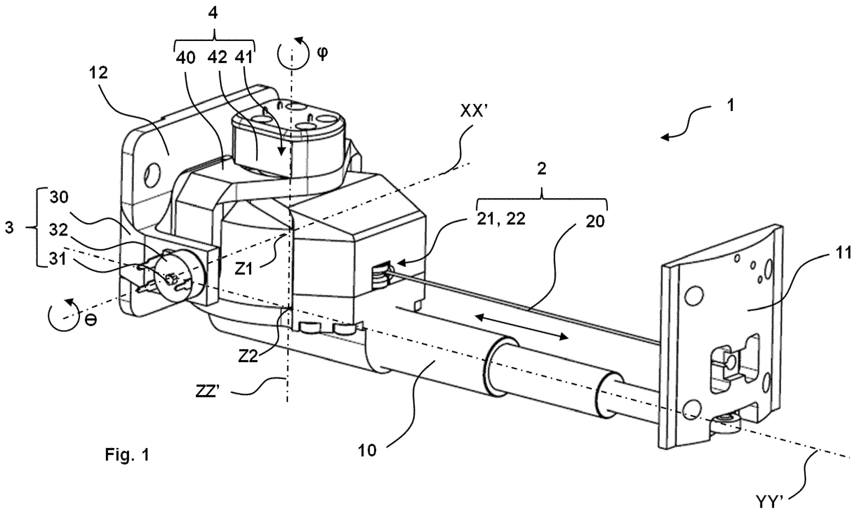

Der Körperverformungsaufnehmer 1 ist in einem kartesischen Koordinatensystem mit den Koordinatenachsen XX', YY' und ZZ' angeordnet. Die Koordinatenachsen XX', YY' und ZZ' stehen senkrecht aufeinander. Die Koordinatenachse YY' und die Längsachse YY' des Teleskopauslegers 10 sind identisch. Die Adjektive "vorderes", "hinteres", "unteres" und "oberes" sind gemäss der Fig. 1 bis 3 auf zwei Zentren Z1 und Z2 bezogen. Die beiden Zentren Z1 und Z2 sind auf der Koordinatenachse ZZ' um 45mm voneinander beabstandet.

Der Körperverformungsaufnehmer 1 weist einen Teleskopausleger 10, ein vorderes Befestigungselement 11 und ein hinteres Befestigungselement 12 auf. Diese Bestandteile des Körperverformungsaufnehmer 1 sind aus mechanisch beständigem Material wie Metall, thermoplastischer Kunststoff, thermoplastische Elastomere, usw. Das vordere Befestigungselement 11 ist an einem vorderen Ende des Körperverformungsaufnehmers 1 angeordnet. Das hintere Befestigungselement 12 ist an einem hinteren Ende des Körperverformungsaufnehmers 1 angeordnet. Die Befestigungselemente 11, 12 ermöglichen eine mechanische Verbindung des Körperverformungsaufnehmers 1 an einem Körper wie ein Crashtest-Dummy, usw. Die mechanische Verbindung erfolgt über Formschluss, Kraftschluss oder Stoffschluss. Vorzugsweise erfolgt die mechanische Verbindung über Kraftschluss mittels lösbarer Schraubverbindungen.

Der Teleskopausleger 10 ist zwischen dem vorderen Befestigungselement 11 und dem hinteren Befestigungselement 12 angeordnet. Der Teleskopausleger 10 weist mehrere zylinderförmige Elemente auf. Die Elemente sind entlang einer Längsachse YY' in Reihe angeordnet. Ein Aussendurchmesser der Elemente ist in Richtung zum vorderen Befestigungselement 11 hin von Element zu Element kleiner. Benachbarte Elemente sind ineinander schiebbar und ineinander passend geführt. Der Teleskopausleger 10 ist entlang der Längsachse YY' reversibel zusammenschiebbar und auseinanderziehbar, wodurch sich seine Länge Y ändert. Vorteilhafterweise ist die Länge Y um 100mm änderbar. Der Teleskopausleger 10 ist an einem vorderen Ende mit dem vorderen Befestigungselement 11 mechanisch verbunden. Diese mechanische Verbindung erfolgt über Formschluss, Kraftschluss oder Stoffschluss. Vorzugsweise erfolgt die mechanisehe Verbindung über Kraftschluss mittels lösbarer Schraubverbindungen.

Der Körperverformungsaufnehmer 1 weist einen Längenaufnehmer 2 und mindestens einen Winkelaufnehmer 3, 4 auf.

Der Längenaufnehmer 2 weist ein Seil 20, eine Seiltrommel 21 und ein Längenaufnehmerelement 22 auf. Das Seil 20 ist mit einer Seillänge parallel zur Längsachse YY' gespannt. Ein vorderes Ende des Seils 20 ist mit dem vorderen Befestigungselement 11 mechanisch verbunden, ein hinteres Ende des Seils 20 ist mit einem Inneren der Seiltrommel 21 mechanisch verbunden. Diese mechanischen Verbindungen erfolgen über Formschluss, Kraftschluss oder Stoffschluss. Das Seil 20 ist im Inneren der Seiltrommel 21 aufgerollt. Das Seil 20 ist auf die Seiltrommel 21 aufrollbar und es ist von der Seilrolle 21 abrollbar. Die Seiltrommel 21 weist ein Federelement auf, welches Federelement das Seil 20 mit einer Federkraft automatisch spannt. Das Seil 20 ist entlang der Koordinatenachse YY' angeordnet. Eine Änderung der Länge Y des Teleskopauslegers 10 ist proportional zu einer Änderung der Seillänge des Seils 20. Das Längenaufnehmerelement 22 ist ein Aufnehmer mit elektrischer Widerstandsänderung, ein induktiver Aufnehmer, ein kapazitiver Aufnehmer, ein inkrementaler Aufnehmer, usw. Vorzugsweise ist das Längenaufnehmerelement 22 ein Aufnehmer mit elektrischer Widerstandsänderung in der Ausführung eines Potentiometers, wie es als Modell 174-0321T der Firma Firstmark Controls kommerziell erhältlich ist. Dieses Potentiometer erfasst eine Änderung der Seillänge als Änderung des elektrischen Widerstandes mit einer Genauigkeit von kleiner 1% und liefert für jede erfasste Seillänge ein analoges Ausgangssignal in Form einer elektrischen Gleichspannung. Die Änderung der Seillänge wird mit einer zeitlichen Auflösung von mindestens 10kHz, vorzugsweise mit 20kHz erfasst. Diese Genauigkeit der Erfassung der Seillänge ist besser als beim Stand der Technik gemäss der Schrift US20050206910A1. Auch ist dieses Potentiometer für eine Seilbeschleunigung von 50g ausgelegt, wobei g eine Erdbeschleunigung von 9.81m/sec² bezeichnet. Solch eine Seilbeschleunigung entspricht dem zulässigen Grenzwert für eine Körperbeschleunigung, die beispielsweise nach Euro NCAP oder US NCAP für die Brustbeschleunigung des Crashtest-Dummys 60g während einer Zeitdauer von mindestens 3msec beträgt.

Der mindestens eine Winkelaufnehmer 3, 4 ist vorteilhafterweise ein Polarwinkelaufnehmer 3 für einen Polarwinkel θ und ein Azimutwinkelaufnehmer 4 für einen Azimutwinkel ϕ. Der Polarwinkel θ gibt eine Drehung des Teleskopauslegers 10 um die Koordinatenachse XX' an. Der Azimutwinkel ϕ gibt eine Drehung des Teleskopauslegers 10 um die Koordinatenachse ZZ' an. Der Polarwinkelaufnehmer 3 weist einen Polarwinkelbügel 30, eine Polarwinkelwelle 31 und ein Polarwinkelaufnehmerelement 32 auf. Der Azimutwinkelaufnehmer 4 weist einen Azimutwinkelbügel 40, eine Azimutwinkelwelle 41 und ein Azimutwinkelaufnehmerelement 42 auf. Der Polarwinkelbügel 30, die Polarwinkelwelle 31, der Azimutwinkelbügel 40 und die Azimutwinkelwelle 41 sind aus mechanisch beständigem Material wie Metall, thermoplastischer Kunststoff, thermoplastische Elastomere, usw.

Der mindestens eine Winkelaufnehmer 3, 4 ist mit dem hinteren Befestigungselement 12 mechanisch verbunden. Diese mechanische Verbindung erfolgt über Formschluss, Kraftschluss oder Stoffschluss. Vorzugsweise erfolgt die mechanische Verbindung über Kraftschluss mittels lösbarer Schraubverbindungen. Ein hinteres Ende des Teleskopauslegers 10 ist mit dem mindestens einen Winkelaufnehmer 3, 4 mechanisch verbunden. Diese mechanische Verbindung erfolgt über Formschluss, Kraftschluss oder Stoffschluss. Vorzugsweise erfolgt die mechanische Verbindung über Kraftschluss mittels lösbarer Schraubverbindungen.

Der Polarwinkelwelle 31 ist im Polarwinkelbügel 30 um die Koordinatenachse XX' frei drehbar gelagert. Der Polarwinkelbügel 30 ist vorzugsweise hufeisenförmig mit einem hinteren gekrümmten Bereich und einem vorderen offenen Bereich. Der Polarwinkelbügel 30 ist weitgehend spiegelsymmetrisch bezüglich einer YZ-Ebene. Der Polarwinkelbügel 30 ist im hinteren gekrümmten Bereich mit dem hinteren Befestigungselement 12 mechanisch verbunden. Diese mechanische Verbindung erfolgt über Formschluss, Kraftschluss oder Stoffschluss. Vorzugsweise erfolgt die mechanische Verbindung über Kraftschluss mittels lösbarer Schraubverbindungen. Der Polarwinkelbügel 30 weist im vorderen offenen Bereich zwei Schenkel auf. In jeden Schenkel ist eine Öffnung angeordnet. In jeder Öffnung ist eine Polarwinkelwelle 31 angeordnet. Die Öffnungen und die Polarwinkelwelle 31 sind entlang der Koordinatenachse XX' angeordnet. Ein vorderes Ende der Polarwinkelwelle 31 und ein hinteres Ende der Polarwinkelwelle 31 sind in den Öffnungen frei drehbar um die Koordinatenachse XX' gelagert. Das Polarwinkelaufnehmerelement 32 ist mechanisch drehfest mit dem Polarwinkelbügel 30 verbunden und an der Polarwinkelwelle 31 angeordnet. Diese mechanische Verbindung erfolgt über Formschluss, Kraftschluss oder Stoffschluss.

Der Azimutwinkelbügel 40 ist vorzugsweise hufeisenförmig mit einem oberen gekrümmten Bereich und einem unteren offenen Bereich. Der Azimutwinkelbügel 40 ist weitgehend spiegelsymmetrisch bezüglich der YZ-Ebene. Der Azimutwinkelbügel 40 weist im unteren offenen Bereich zwei Schenkel auf. In jeden Schenkel ist eine Öffnung angeordnet. Die Öffnungen sind entlang der Koordinatenachse XX' angeordnet. Der Azimutwinkelbügel 40 ist über die Öffnungen mit der Polarwinkelwelle 31 mechanisch verbunden. Diese mechanische Verbindung erfolgt über Formschluss, Kraftschluss oder Stoffschluss. Vorzugsweise erfolgt die mechanische Verbindung über Kraftschluss mittels lösbarer Schraubverbindungen.

Die Azimutwinkelwelle 41 ist im Azimutwinkelbügel 40 um die Koordinatenachse ZZ' frei drehbar gelagert. Der Azimutwinkelbügel 40 weist im oberen offenen Bereich eine Öffnung auf. In der Öffnung ist die Azimutwinkelwelle 41 angeordnet. Die Öffnung ist entlang der Koordinatenachse ZZ' angeordnet. Ein oberes Ende der Azimutwinkelwelle 41 ist in der Öffnung frei drehbar um die Koordinatenachse ZZ' gelagert. Das Azimutwinkelaufnehmerelement 42 ist mechanisch drehfest mit dem Azimutwinkelbügel 40 verbunden und an der Azimutwinkelwelle 41 angeordnet. Diese mechanische Verbindung erfolgt über Formschluss, Kraftschluss oder Stoffschluss.

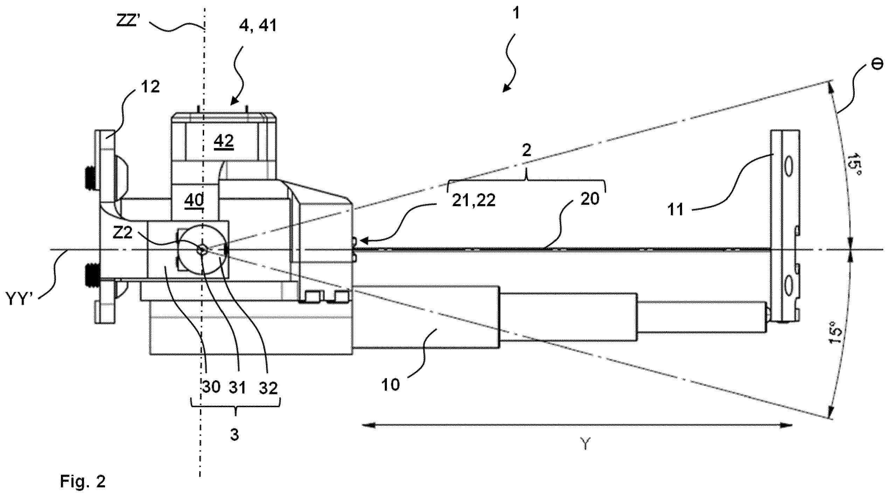

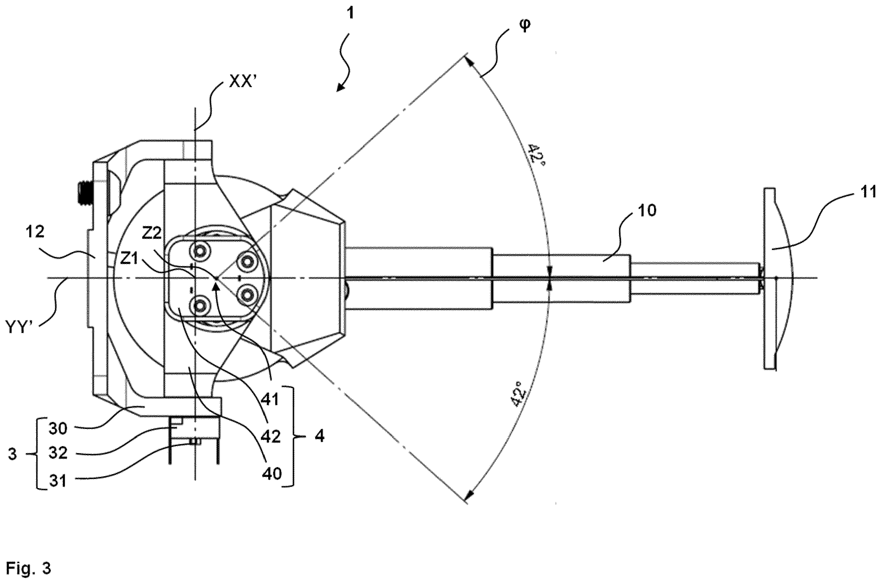

Das Polarwinkelaufnehmerelement 32 und das Azimutwinkelaufnehmerelement 42 sind jeweils ein Aufnehmer mit elektrischer Widerstandsänderung, ein induktiver Aufnehmer, ein kapazitiver Aufnehmer, ein inkrementaler Aufnehmer, usw. Vorzugsweise sind das Polarwinkelelement 32 und das Azimutwinkelelement 42 jeweils ein Aufnehmer mit elektrischer Widerstandsänderung in der Ausführung eines Potentiometers, wie es als Modell PT-10 der Firma Piher Sensors & Controls S.A. kommerziell erhältlich ist. Dieses Potentiometer fasst einen Winkel (Polarwinkel θ und Azimutwinkel ϕ) jeweils über einen Schleifer. Dazu ist die Welle (Polarwinkelwelle 31 und Azimutwinkelwelle 41) jeweils mechanisch mit dem Schleifer verbunden. Diese mechanische Verbindung erfolgt über Formschluss, Kraftschluss oder Stoffschluss. Eine Drehbewegung der Welle wird so direkt auf den Schleifer übertragen, entsprechend der Stellung des Schleifers ändert sich der elektrische Widerstand des Aufnehmers. Eine Drehung des Teleskopauslegers 10 um eine Koordinatenachse XX', ZZ' ist also proportional zu einer Änderung des elektrischen Widerstandes. Dieses Potentiometer erfasst einen Winkel mit einer Genauigkeit von rund 3% und liefert für jeden erfassten Winkel ein analoges Ausgangssignal in Form einer elektrischen Gleichspannung. Das analoge Ausgangssignal wird mit einer zeitlichen Auflösung von mindestens 10kHz, vorzugsweise mit 20kHz erfasst. Gemäss Fig. 2 wird der Polarwinkel θ über einen Bereich von +/- 15° erfasst. Gemäss Fig. 3 wird der Azimutwinkel ϕ über einen Bereich von +/- 42° erfasst.

Die Ausgangssignale des Längenaufnehmerelementes 22, des Polarwinkelaufnehmerelementes 32 und des Azimutwinkelaufnehmerelementes 42 werden in einer Auswerteeinheit gesammelt. Die gesammelten Ausgangssignale werden digitalisiert und in einem zentralen Speicher gespeichert. Die Datenübertragung erfolgt über ein Systemkabel. Diese Systemkabel führt ebenfalls eine elektrische Spannungsversorgung für das Längenaufnehmerelement 22, das Polarwinkelaufnehmerelement 32 und das Azimutwinkelaufnehmerelement 42.

Der Teleskopausleger 10 ist mit einem hinteren Ende mit der Azimutwinkelwelle 41 mechanisch drehfest verbunden. Diese mechanische Verbindung erfolgt über Formschluss, Kraftschluss oder Stoffschluss. Vorzugsweise erfolgt die mechanische Verbindung über Kraftschluss mittels lösbarer Schraubverbindungen.

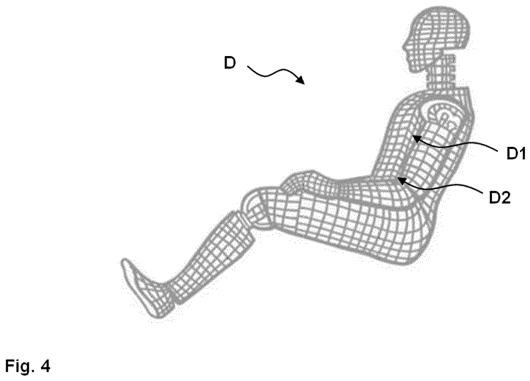

Fig. 4 zeigt eine Anwendung des Körperverformungsaufnehmer 1 in einem Crashtest-Dummy D. So lässt sich der Körperverformungsaufnehmer 1 über das vordere Befestigungselement 11 und das hintere Befestigungselement 12 in einen Brustkorb D1 eines Crashtest-Dummys einbauen. Und der Körperverformungsaufnehmer 1 lässt sich über das vordere Befestigungselement 11 und das hintere Befestigungselement 12 in einen Unterleib D2 eines Crashtest-Dummys einbauen. Bei Kenntnis der vorliegenden Erfindung lässt sich der Körperverformungsaufnehmer 1 auch in beliebigen anderen Körpern wie in Automobilen, Eisenbahnen, Strassenbahnen, Flugzeugen, usw. anwenden, um dort Körperverformungen aufzunehmen.

### Bezugszeichenliste

- 1: Körperverformungsaufnehmer
- 2: Längenaufnehmer
- 3: Winkelaufnehmer für einen Polarwinkel
- 4: Winkelaufnehmer für einen Azimutwinkel
- 10: Teleskopausleger
- 11: vorderes Befestigungselement
- 12: hinteres Befestigungselement
- 20: Seil
- 21: Seiltrommel
- 22: Längenaufnehmerelement
- 30: Polarwinkelbügel
- 31: Polarwinkelwelle
- 32: Polarwinkelaufnehmerelement
- 40: Azimutwinkelbügel
- 41: Azimutwinkelwelle
- 42: Azimutwinkelaufnehmerelement
- D: Crashtest-Dummy
- D1: Brustkorb
- D2: Unterleib
- XX': Koordinatenachse
- YY': Koordinatenachse
- ZZ': Koordinatenachse
- Y: Länge
- YZ: Ebene
- Z1: erstes Zentrum
- Z2: zweites Zentrum
- θ: Polarwinkel
- ϕ: Azimutwinkel

## Patentansprüche

1. Körperverformungsaufnehmer (1) mit einer entlang einer Längsachse (YY') zusammenschiebbaren Teleskopausleger (10); mit einem Längenaufnehmer (2) zur Erfassung einer Länge (Y) des Teleskopauslegers (10) und mit mindestens einem Winkelaufnehmer (3, 4) zur Erfassung einer Drehung des Teleskopauslegers (10) um eine Achse (XX', ZZ') senkrecht zur Längsachse (YY'); wobei der Körperverformungsaufnehmer (1) dazu eingerichtet ist, dass die Erfassung der Länge (Y) des Teleskopauslegers (10) und die Erfassung einer Drehung des Teleskopauslegers (10) mit einer zeitlichen Auflösung von mindestens 10kHz erfolgt; wobei der Längenaufnehmer (2) ein Seil (20) aufweist; wobei das Seil (20) mit einer Seillänge parallel zur Längsachse (YY') gespannt ist; und wobei eine Änderung der Länge (Y) des Teleskopauslegers (10) proportional zu einer Änderung der Seillänge des Seils (20) ist.

2. Körperverformungsaufnehmer (1) nach Anspruch 1, **dadurch gekennzeichnet, dass** der Körperverformungsaufnehmer (1) ein vorderes Befestigungselement (11) aufweist; dass ein vorderes Ende des Teleskopauslegers (10) mit dem vorderen Befestigungselement (11) mechanisch verbunden ist; dass ein vorderes Ende des Seils (20) mit dem vorderen Befestigungselement (11) mechanisch verbunden ist; der Längenaufnehmer (2) eine Seiltrommel (21) aufweist; dass ein hinteres Ende des Seils (20) mit einem Inneren der Seiltrommel (21) mechanisch verbunden ist; und dass eine Seilbeschleunigung dem zulässigen Grenzwert für eine Körperbeschleunigung entspricht.

3. Körperverformungsaufnehmer (1) nach Anspruch 2, **dadurch gekennzeichnet, dass** der Längenaufnehmer (2) ein Längenaufnehmerelement (22) aufweist; und dass das Längenaufnehmerelement (22) ein Aufnehmer mit elektrischer Widerstandsänderung in der Ausführung eines Potentiometers ist, welches Potentiometer eine Änderung der Seillänge als Änderung eines elektrischen Widerstandes erfasst.

4. Körperverformungsaufnehmer (1) nach einem der Ansprüche 1 bis 3, **dadurch gekennzeichnet, dass** der mindestens eine Winkelaufnehmer (3, 4) ein Polarwinkelaufnehmer (3) für einen Polarwinkel (θ) ist, wobei der Polarwinkel (θ) eine Drehung des Teleskopauslegers (10) um eine Koordinatenachse XX' angibt, welche Koordinatenachse XX' senkrecht auf der Längsachse (YY') steht; und dass der mindestens eine Winkelaufnehmer (3, 4) ein Azimutwinkelaufnehmer (4) für einen Azimutwinkel (ϕ) ist, wobei der Azimutwinkel (ϕ) eine Drehung des Teleskopauslegers (10) um eine Koordinatenachse ZZ' angibt, welche Koordinatenachse ZZ' senkrecht auf der Längsachse (YY') steht.

5. Körperverformungsaufnehmer (1) nach Anspruch 4, **dadurch gekennzeichnet, dass** der Polarwinkelaufnehmer (3) einen Polarwinkelbügel (30), eine Polarwinkelwelle (31) und ein Polarwinkelaufnehmerelement (32) aufweist.

6. Körperverformungsaufnehmer (1) nach Anspruch 5, **dadurch gekennzeichnet, dass** die Polarwinkelwelle (31) im Polarwinkelbügel (30) um die Koordinatenachse XX' frei drehbar gelagert ist; und dass das Polarwinkelaufnehmerelement (32) mechanisch drehfest mit dem Polarwinkelbügel (30) verbunden und an der Polarwinkelwelle (31) angeordnet ist.

7. Körperverformungsaufnehmer (1) nach einem der Ansprüche 4 bis 6, **dadurch gekennzeichnet, dass** der Azimutwinkelaufnehmer (4) einen Azimutwinkelbügel (40), eine Azimutwinkelwelle (41) und ein Azimutwinkelaufnehmerelement (42) aufweist.

8. Körperverformungsaufnehmer (1) nach Anspruch 7, **dadurch gekennzeichnet, dass** die Azimutwinkelwelle (41) im Azimutwinkelbügel (40) um die Koordinatenachse ZZ' frei drehbar gelagert ist; und dass das Azimutwinkelaufnehmerelement (42) mechanisch drehfest mit dem Azimutwinkelbügel (40) verbunden und an der Azimutwinkelwelle (41) angeordnet ist.

9. Körperverformungsaufnehmer (1) nach einem der Ansprüche 4 bis 8, **dadurch gekennzeichnet, dass** der mindestens eine Winkelaufnehmer (3, 4) ein Aufnehmer mit elektrischer Widerstandsänderung in der Ausführung eines Potentiometers ist, welches Potentiometer eine Drehung des Teleskopauslegers (10) um eine Koordinatenachse (XX', ZZ') als Änderung eines elektrischen Widerstandes erfasst.

10. Körperverformungsaufnehmer (1) nach einem der Ansprüche 4 bis 9, **dadurch gekennzeichnet, dass** der Körperverformungsaufnehmer (1) ein hinteres Befestigungselement (12) aufweist; dass der mindestens eine Winkelaufnehmer (3, 4) mit dem hinteren Befestigungselement (12) mechanisch verbunden ist; und dass ein hinteres Ende des Teleskopauslegers (10) mit dem mindestens einen Winkelaufnehmer (3, 4) mechanisch verbunden ist.

11. Körperverformungsaufnehmer (1) nach Anspruch 10, **dadurch gekennzeichnet, dass** der Polarwinkelbügel (30) mit dem hinteren Befestigungselement (12) mechanisch verbunden ist; dass die Polarwinkelwelle (31) im Polarwinkelbügel (30) um die Koordinatenachse XX' frei drehbar gelagert ist; dass die Azimutwinkelwelle (41) mit der Polarwinkelwelle (31) mechanisch drehfest verbunden ist; dass die Azimutwinkelwelle (41) im Azimutwinkelbügel (40) um die Koordinatenachse ZZ' frei drehbar gelagert ist; und dass ein hinteres Ende des Teleskopauslegers (10) mit der Azimutwinkelwelle (41) mechanisch drehfest verbunden ist.

12. Anwendung eines Körperverformungsaufnehmers (1) nach einem der Ansprüche 1 bis 11, **dadurch gekennzeichnet, dass** er in einem Crashtest-Dummy (D) eingebaut ist.

13. Anwendung eines Körperverformungsaufnehmers (1) nach Anspruch 12, **dadurch gekennzeichnet, dass** er über ein vorderes Befestigungselement (11) und ein hinteres Befestigungselement (12) in einen Brustkorb (D1) eines Crashtest-Dummys (D) eingebaut ist.

14. Anwendung eines Körperverformungsaufnehmers (1) nach einem der Ansprüche 12 oder 13, **dadurch gekennzeichnet, dass** er über ein vorderes Befestigungselement (11) und ein hinteres Befestigungselement (12) in einem Unterleib (D2) eines Crashtest-Dummys (D) eingebaut ist.

## Claims

1. A body deformation sensor (1) having a telescopic arm (10) that is slidably collapsible along a longitudinal axis (YY'); and comprising a length sensor (2) for detecting a length (Y) of the telescopic arm (10) and comprising at least one angle sensor (3, 4) for detecting a rotation of the telescopic arm (10) around an axis (XX', ZZ') perpendicular to said longitudinal axis (YY'); wherein the body deformation sensor is adapted such that the detection of the length (Y) of the telescopic arm (10) and the detection of a rotation of the telescopic arm (10) are performed with a temporal resolution of at least 10 kHz; wherein said length sensor (2) comprises a rope (20); wherein the rope (20) is stretched with a rope length parallel to the longitudinal axis (YY'); and wherein a change in the length (Y) of the telescopic arm (10) is proportional to a change of the rope length of the rope (20) .

2. The body deformation sensor (1) according to claim 1, **characterized in that** said body deformation sensor (1) comprises a front fastening element (11); a front end of the telescopic arm (10) is mechanically connected to said front fastening element (11); a front end of the rope (20) is mechanically connected to the front fastening element (11); the length sensor (2) comprises a rope drum (21); a rear end of the rope (20) is mechanically connected to an interior of the rope drum (21); and that a rope acceleration complies with the permissible limit value for the acceleration of a body.

3. The body deformation sensor (1) according to claim 2 **characterized in that** the length sensor (2) comprises a length sensor element (22); and that the length sensor element (22) is a sensor changing its electrical resistance in the form of a potentiometer wherein said potentiometer captures a change in the rope length as a change of an electrical resistance.

4. The body deformation sensor (1) according to any of the claims 1 to 3 **characterized in that** the at least one angle sensor (3, 4) is a polar angle sensor (3) for a polar angle (Θ) wherein said polar angle (Θ) indicates a rotation of the telescopic arm (10) around a coordinate axis XX' wherein said coordinate axis XX' is perpendicular to the longitudinal axis (YY'); and that the at least one angle sensor (3, 4) is an azimuth angle sensor (4) for an azimuth angle (Φ) wherein said azimuth angle (Φ) indicates a rotation of the telescopic arm (10) around a coordinate axis ZZ' wherein said coordinate axis ZZ' is perpendicular to the longitudinal axis (YY').

5. The body deformation sensor (1) according to claim 4 **characterized in that** the polar angle sensor (3) comprises a polar angle bracket (30), a polar angle shaft (31) and a polar angle sensor element (32).

6. The body deformation sensor (1) according to claim 5 **characterized in that** the polar angle shaft (31) is mounted in the polar angle bracket (30) to be freely rotatable around the coordinate axis XX'; and that the polar angle sensor element (32) is mechanically connected to the polar angle shaft (31) in a non-rotatable manner and is arranged at the polar angle bracket (30).

7. The body deformation sensor (1) according to any of the claims of 4 to 6 **characterized in that** the azimuth angle sensor (4) comprises an azimuth angle bracket (40), an azimuth angle shaft (41) and an azimuth angle sensor element (42).

8. The body deformation sensor (1) according to claim 7 **characterized in that** the azimuth angle shaft (41) is mounted in the azimuth angle bracket (40) to be freely rotatable around the coordinate axis ZZ'; and that the azimuth angle sensor element (42) is mechanically connected to the azimuth angle bracket (40) in a non-rotatable manner and is arranged at the azimuth angle shaft (41).

9. The body deformation sensor (1) according to any of the claims of 4 to 8 **characterized in that** the at least one angle sensor (3, 4) is a sensor changing its electrical resistance in the form of a potentiometer, which potentiometer detects a rotation of the telescopic arm (10) around a coordinate axis (XX', ZZ') as a change in the electrical resistance.

10. The body deformation sensor (1) according to any of the claims of 4 to 9 **characterized in that** the body deformation sensor (1) comprises a rear fastening element (12); the at least one angle sensor (3, 4) is mechanically connected to the rear fastening element (12); and that a rear end of the telescopic arm (10) is mechanically connected to the at least one angle sensor (3, 4).

11. The body deformation sensor (1) according to claim 10 **characterized in that** the polar angle bracket (30) is mechanically connected to the rear fastening element (12); the polar angle shaft (31) is mounted in the polar angle bracket (30) to be freely rotatable around the coordinate axis XX'; the azimuth angle shaft (41) is mechanically connected to the polar angle shaft (31) in a non-rotatable manner; the azimuth angle shaft (41) is mounted in the azimuth angle bracket (40) to be freely rotatable around the coordinate axis ZZ'; and that a rear end of the telescopic arm (10) is mechanically connected to the azimuth angle shaft (41) in a non-rotatable manner.

12. A use of a body deformation sensor (1) according to any of claims 1 to 11 **characterized in that** it is mounted in a crash test dummy (D) .

13. The use of a body deformation sensor (1) according to claim 12 **characterized in that** it is fitted into a chest (D1) of a crash test dummy (D) by front (11) and rear (12) fastening elements.

14. The use of a body deformation sensor (1) according to any of the claims 12 or 13 **characterized in that** it is fitted in an abdomen (D2) of a crash test dummy (D) by front (11) and rear (12) fastening elements.

## Revendications

1. Capteur de déformation d'un corps (1) comprenant un bras télescopique (10) pliable de manière coulissante le long d'un axe longitudinal (YY'); un capteur de longueur (2) pour détecter une longueur (Y) du bras télescopique (10) et au moins un capteur d'angle (3, 4) pour détecter une rotation du bras télescopique (10) autour d'un axe (XX', ZZ') perpendiculaire audit axe longitudinal (YY'); dans lequel le capteur de déformation d'un corps (1) est apte à effectuer la détection de la longueur (Y) du bras télescopique (10) et la détection d'une rotation du bras télescopique (10) avec une résolution temporelle d'au moins 10 kHz; dans lequel ledit capteur de longueur (2) comprend une corde (20); dans lequel la corde (20) est tendue avec une longueur de corde s'étendant parallèlement à l'axe longitudinal (YY'); et dans lequel un changement de la longueur (Y) du bras télescopique (10) est proportionnel à un changement de la longueur de corde de ladite corde (20).

2. Capteur de déformation d'un corps (1) selon la revendication 1, **caractérisé en ce que** le capteur de déformation d'un corps (1) comprend un élément de fixation avant (11); **en ce qu'**une extrémité avant du bras télescopique (10) est connectée mécaniquement audit élément de fixation avant (11); **en ce qu'**une extrémité avant de la corde (20) est reliée mécaniquement à l'élément de fixation avant (11); le capteur de longueur (2) comprend un tambour à corde (21); **en ce qu'**une extrémité arrière du corde (20) est reliée mécaniquement à l'intérieur du tambour de corde (21); et **en ce qu'**une accélération de la corde est conforme à la valeur limite admissible pour une accélération d'un corps.

3. Capteur de déformation d'un corps (1) selon la revendication 2, **caractérisé en ce que** le capteur de longueur (2) comprend un élément capteur de longueur (22); et **en ce que** ledit élément capteur de longueur (22) est un capteur avec un changement de résistance électrique sous forme d'un potentiomètre dans lequel ledit potentiomètre détecte un changement de longueur de corde en tant que changement de résistance électrique.

4. Capteur de déformation d'un corps (1) selon l'une quelconque des revendications 1 à 3, **caractérisé en ce que** ledit au moins un capteur d'angle (3, 4) est un capteur d'angle polaire (3) pour un angle polaire (θ) dans lequel l'angle polaire (θ) indique une rotation du bras télescopique (10) autour d'un axe de coordonnées XX', ledit axe de coordonnées XX' étant perpendiculaire à l'axe longitudinal (YY'); et **en ce que** ledit au moins un capteur d'angle (3, 4) est un capteur d'angle d'azimut (4) pour un angle d'azimut (ϕ) dans lequel l'angle d'azimut (ϕ) indique une rotation du bras télescopique (10) autour d'un axe de coordonnées ZZ', ledit axe de coordonnées ZZ' étant perpendiculaire à l'axe longitudinal (YY').

5. Capteur de déformation d'un corps (1) selon la revendication 4, **caractérisé en ce que** le capteur d'angle polaire (3) comprend un support d'angle polaire (30), un arbre d'angle polaire (31) et un élément capteur d'angle polaire (32).

6. Capteur de déformation d'un corps (1) selon la revendication 5, **caractérisé en ce que** l'arbre d'angle polaire (31) est monté dans le support d'angle polaire (30) de façon à tourner librement autour de l'axe de coordonnées XX'; et **en ce que** l'élément capteur d'angle polaire (32) est connecté mécaniquement de façon non rotative au support d'angle polaire (30) et est disposé sur l'arbre d'angle polaire (31).

7. Capteur de déformation d'un corps (1) selon l'une quelconque des revendications 4 à 6, **caractérisé en ce que** le capteur d'angle d'azimut (4) comprend un support d'angle d'azimut (40), un arbre d'angle d'azimut (41) et un élément capteur d'angle d'azimut (42).

8. Capteur de déformation d'un corps (1) selon la revendication 7, **caractérisé en ce que** l'arbre d'angle d'azimut (41) est monté dans le support d'angle d'azimut (40) de façon à tourner librement autour de l'axe de coordonnées ZZ'; et **en ce que** l'élément capteur d'angle d'azimut (42) est connecté mécaniquement de façon non rotative au support d'angle d'azimut (40) et est disposé sur l'arbre d'angle d'azimut (41).

9. Capteur de déformation d'un corps (1) selon l'une quelconque des revendications 4 à 8, **caractérisé en ce que** ledit au moins un capteur d'angle (3, 4) est un capteur avec un changement de résistance électrique sous forme d'un potentiomètre, dans lequel ledit potentiomètre détecte une rotation du bras télescopique (10) autour d'un axe de coordonnées (XX', ZZ') en tant que changement de résistance électrique.

10. Capteur de déformation d'un corps (1) selon l'une quelconque des revendications 4 à 9, **caractérisé en ce que** le capteur de déformation d'un corps (1) comprend un élément de fixation arrière (12); **en ce que** ledit au moins un capteur d'angle (3, 4) est relié mécaniquement audit élément de fixation arrière (12); et **en ce qu'**une extrémité arrière du bras télescopique (10) est connectée mécaniquement audit au moins un capteur d'angle (3, 4).

11. Capteur de déformation d'un corps (1) selon la revendication 10, **caractérisé en ce que** le support d'angle polaire (30) est relié mécaniquement à l'élément de fixation arrière (12); **en ce que** l'arbre d'angle polaire (31) est monté dans le support d'angle polaire (30) de façon à tourner librement autour de l'axe de coordonnées XX'; **en ce que** l'arbre d'angle d'azimut (41) est connecté mécaniquement de façon non rotative à l'arbre d'angle polaire (31); **en ce que** l'arbre d'angle d'azimut (41) est monté dans le support d'angle d'azimut (40) de façon à tourner librement autour de l'axe de coordonnées ZZ'; et **en ce qu'**une extrémité arrière du bras télescopique (10) est reliée mécaniquement de façon non rotative à l'arbre d'angle d'azimut (41).

12. Utilisation d'un capteur de déformation d'un corps (1) selon l'une quelconque des revendications 1 à 11, **caractérisé en ce qu'**il est installé dans un dispositif anthropomorphe d'essai (D).

13. Utilisation d'un capteur de déformation d'un corps (1) selon la revendication 12, **caractérisée en ce qu'**il est installé dans une cage thoracique (D1) d'un dispositif anthropomorphe d'essai (D) par l'intermédiaire des éléments de fixation avant (11) et arrière (12).

14. Utilisation d'un capteur de déformation d'un corps (1) selon l'une quelconque des revendications 12 ou 13, **caractérisé en ce qu'**il est installé dans l'abdomen (D2) d'un dispositif anthropomorphe d'essai (D) par l'intermédiaire des éléments de fixation avant (11) et arrière (12).
